# EUROPEAN PATENT APPLICATION

(11) **EP 4 543 064 A1**
(43) Date of publication of application: **23.04.2025**
(21) Application number: 23825746.3
(22) Date of filing: 11.01.2023
(51) Int. Cl.: H04W 12/06

(54) **INTERNET OF THINGS-BASED WIRELESS ACCESS METHOD, INTERNET OF THINGS-BASED INFORMATION PROCESSING METHOD, AND INTERNET OF THINGS-BASED NETWORK SYSTEM**

(30) Priority: 24.06.2022 CN 202210734624
(71) Applicant: ZTE Corporation, Shenzhen, Guangdong 518057 (CN)
(72) Inventor: NIU, Li, Shenzhen, Guangdong 518057 (CN); DAI, Bo, Shenzhen, Guangdong 518057 (CN); LU, Ting, Shenzhen, Guangdong 518057 (CN)
(74) Representative: Deambrogi, Edgardo
(86) International application number: PCT/CN2023/071819
(87) International publication number: WO 2023/246086

(57) **Abstract**

Embodiments of the present disclosure provide an internet of things-based wireless access method, an internet of things-based information processing method, and an internet of things-based network system. The method includes: connecting to a core network through an interface between the core network and an access network; and reporting at least one of the following information of an Internet of Things terminal to the core network: reachability management information, an authentication result, and an identification result. The problem that a 5G radio access network architecture is unable to adapt to Internet of Things terminals in the related art can be solved. By modifying functions performed by the core network and the access network, a modified radio access network can be applicable to access and management of the Internet of Things terminals.

## Description

### Cross-Reference to Related Application

The present disclosure claims priority to Chinese patent application No. CN202210734624.0, entitled "Internet Of Things-based Wireless Access Method, Internet of Things-based Information Processing Method, and Internet Of Things-based Network System", filed on June 24, 2022, the entire contents of which are incorporated herein by reference.

### Technical Field

Embodiments of the present disclosure relate to the field of communication, and specifically to, an internet of things-based wireless access method, an internet of things-based information processing method, and an internet of things-based network system.

### Background

A 5G radio access network architecture mainly includes a 5G access network and a 5G core network, and the 5G core network has numerous network elements. The network elements mainly included in the 5G core network have an access and mobility management function (AMF), a session management function (SMF), and a user plane function (UPF). The AMF is responsible for terminal access authorization, handover, etc. The SMF provides service continuity and uninterrupted user experience of the service, including cases that IP addresses and/or anchor points change. A protocol data unit (PDU) session associated with the UPF may be serviced by nodes of a radio access network (RAN) through an area serviced by an N3 interface between the RAN and the UPF, without the need to add new UPFs or remove/reallocate UPFs between them.

However, with the emergence of new services such as Internet of Things terminal services and new technologies like cell free technology, the existing network architecture can no longer meet these demands, necessitating upgrades or restructuring of the existing network.

Regarding the problem that the 5G radio access network architecture is unable to adapt to Internet of Things terminals in the related art, a solution has not yet been proposed.

### Summary

Embodiments of the present disclosure provide an internet of things-based wireless access method, an internet of things-based information processing method, and an internet of things-based network system, so as to at least solve the problem that a 5G radio access network architecture is unable to adapt to Internet of Things terminals in the related art.

According to an embodiment of the present disclosure, a radio access method based on Internet of Things is provided, and includes:
a core network is connected to through an interface between the core network and an access network; and
at least one of the following information of an Internet of Things terminal is reported to the core network: reachability management information, an authentication result, and an identification result.

According to another embodiment of the present disclosure, an information processing method based on Internet of Things is further provided, and includes:
an access network is connected to through an interface between a core network and the access network; and
at least one of the following information of an Internet of Things terminal reported by the access network is received: reachability management information, an authentication result, and an identification result.

According to another embodiment of the present disclosure, a network system based on Internet of Things is further provided, and includes an access network and a core network, where
the core network is configured to perform charging management on an Internet of Things terminal; and the access network is configured to access the core network through an interface between the core network and the access network so as to report at least one of the following information of the Internet of Things terminal to the core network: reachability management information, an authentication result, and an identification result.

According to another embodiment of the present disclosure, a computer-readable storage medium is further provided, and the storage medium stores a computer program, where the computer program is configured to cause, when executed by a processor, the processor to perform the steps of any one of the above method embodiments during operation.

According to another embodiment of the present disclosure, an electronic apparatus is further provided, and includes a memory and a processor. The memory stores a computer program, and the processor is configured to execute the computer program to perform the steps of any one of the above method embodiments.

### Brief Description of the Drawings

Fig. 1 is a block diagram of a hardware structure of a radio access method based on Internet of Things according of a mobile terminal to an embodiment of the present disclosure;
Fig. 2 is a flowchart of a radio access method based on Internet of Things according to an embodiment of the present disclosure;
Fig. 3 is a flowchart of an information processing method based on Internet of Things according to an embodiment of the present disclosure;
Fig. 4 is an architecture diagram of a network system with a user plane connection according to an embodiment;
Fig. 5 is an architecture diagram of a network system without a user plane connection according to an embodiment;
Fig. 6 is a first architecture diagram of a network system based on an Internet of Things terminal according to an embodiment;
Fig. 7 is a second architecture diagram of a network system based on an Internet of Things terminal according to an embodiment;
Fig. 8 is a block diagram of a protocol stack according to an embodiment;
Fig. 9 is a flowchart of establishing a connection between a base station and a core network according to an embodiment;
Fig. 10 is a first flowchart of information interaction between a base station and a core network according to an embodiment;
Fig. 11 is a second flowchart of information interaction between a base station and a core network according to an embodiment;
Fig. 12 is a block diagram of a network system based on Internet of Things according to an embodiment;
Fig. 13 is a first minimal architecture diagram of a network system based on an Internet of Things terminal according to an embodiment; and
Fig. 14 is a second minimal architecture diagram of a network system based on an Internet of Things terminal according to an embodiment.

### Detailed Description of the Embodiments

Embodiments of the present disclosure are described in detail with reference to the accompanying drawings and in conjunction with embodiments as below.

It should be noted that the terms such as "first" and "second" of the specification and claims of the present disclosure, as well as the foregoing accompanying drawings are used to distinguish similar objects but are not necessarily intended to describe specific sequences or precedence orders.

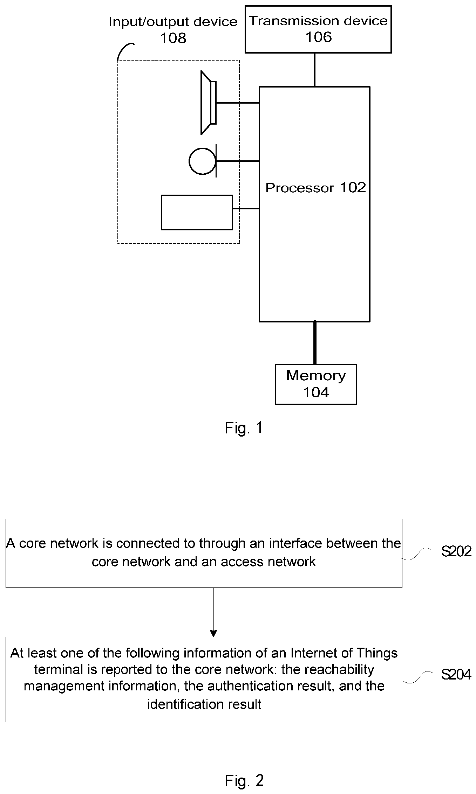

The method embodiments provided in the embodiments of the present disclosure may be performed in a mobile terminal, a computer terminal, or similar arithmetic units. Taking operation on the mobile terminal as an example, Fig. 1 is a block diagram of a hardware structure of a mobile terminal for a radio access method based on Internet of Things according to an embodiment of the present disclosure. As shown in Fig. 1, the mobile terminal may include one or more (only one is shown in Fig. 1) processors 102 (the processor 102 may include, but is not limited to, a microcontroller unit (MCU), or a field-programmable gate array (FPGA), or another processing unit) and a memory 104 configured to store data. The mobile terminal may further include a transmission device 106 used for a communication function and an input and output device 108. Those of ordinary skill in the art should understand that the structure shown in Fig. 1 is merely illustrative, and does not limit the structure of the above mobile terminal. For example, the mobile terminal may further include more or fewer components than those shown in Fig. 1, or have a different configuration from that shown in Fig. 1.

The memory 104 may be configured to store computer programs, such as software programs and modules of application software, like a computer program corresponding to the radio access method based on Internet of Things in this embodiment of the present disclosure. The processor 102 performs, by running the computer program stored in the memory 104, various functional applications and business chain address pool slice processing, thereby implementing the above method. The memory 104 may include a high-speed random access memory, and may also include a non-volatile memory, such as one or more magnetic storage apparatuses, flash memories, or other nonvolatile solid-state memories. In some examples, the memory 104 may further include memories which are remotely set relative to the processor 102, and these remote memories may be connected to the mobile terminal through a network. The examples of the above network include, but are not limited to, an Internet, an intranet, a local area network, a mobile communication network, and a combination thereof.

The transmission device 106 is configured to receive or transmit data through a network. A specific example of the above network may include a radio network provided by a communication provider of the mobile terminal. In an example, the transmission device 106 includes a network interface controller (NIC for short) which may be connected with other network devices through a base station so as to communicate with the Internet. In an example, the transmission device 106 may be a radio frequency (RF for short) module configured to communicate with the Internet in a wireless manner.

This embodiment provides a radio access method based on Internet of Things operating on the above mobile terminal or network architecture. Fig. 2 is a flowchart of a radio access method based on Internet of Things according to an embodiment of the present disclosure. As shown in Fig. 2, the process includes the following steps:
At step S202: a core network is connected to through an interface between the core network and an access network.

In this embodiment, step S202 specifically may include:, based on a control plane entity, the core network is accessed through the interface provided by the control plane entity of the core network, and at least one of the following information is reported to the core network: reachability management information, an authentication result, and an identification result.

At step S204: at least one of the following information of an Internet of Things terminal is reported to the core network: the reachability management information, the authentication result, and the identification result.

Through steps S202 to S204, the problem that a 5G radio access network architecture is unable to adapt to Internet of Things terminals in the related art can be solved. By modifying functions performed by the core network and the access network, a modified radio access network can be applicable to access and management of the Internet of Things terminals.

In an optional embodiment, before step S204, the method further includes: the reachability management information of the Internet of Things terminal is obtained; and/or authentication is performed on the Internet of Things terminal to obtain the authentication result; and/or identification is performed on the Internet of Things terminal to obtain the identification result.

In an embodiment, the method further includes: a request message requesting for establishing a connection is sent to the control plane entity of the core network through a control plane entity of the access network, where the request message carries at least one of the following: an identifier of the connection, a target DN identifier, a target slice identifier, an identifier of a session management function, a connection type, resources on an access network side, and quality of service (QoS) requirements for services; and receiving, based on the control plane entity of the access network, an establishment confirmation message returned by the core network, where the establishment confirmation message carries at least one of the following: the identifier of the connection, an identifier indicating success or failure, and resources on a core network side. In this embodiment, the control plane entity may specifically be the SMF, etc.

In another embodiment, the method further includes: in the case that the reachability management information is location change information, location change information indicating a change in the access network of the Internet of Things terminal is obtained; the location change information is reported to the core network, and specifically, the location change information is sent to the core network through a first message; and an execution result returned by the core network through a second message is received, where the execution result carries a reception result indicating whether the location change information is successfully received.

In another embodiment, the method further includes: in the case that the reachability management information is increased or decreased tag information, or tag information of a reachable terminal, through a third message, the increased or decreased tag information sent by the core network is received, and a reception result indicating whether the third message is successfully received is fed back to the core network through a fourth message; or a fifth message from the core network requesting for reporting the increased or decreased tag information is received, or the tag information of the reachable terminal, and the increased or decreased tag information, or the tag information of the reachable terminal is fed back to the core network through a sixth message.

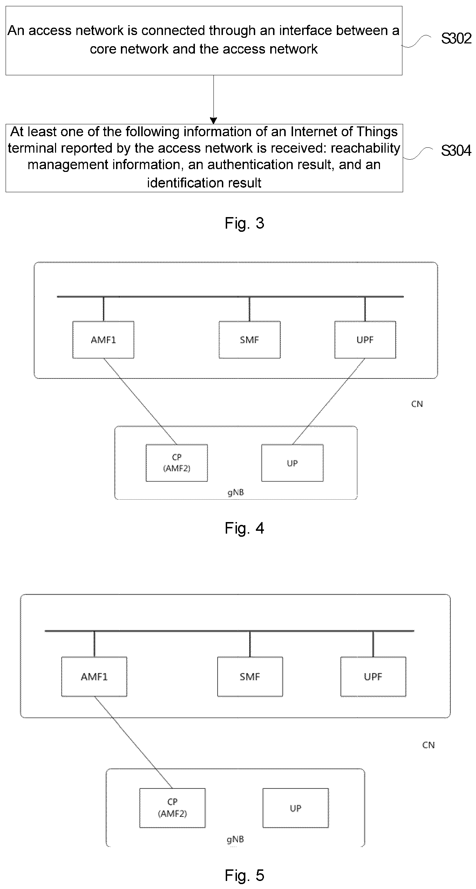

According to another embodiment of the present disclosure, a radio access method based on Internet of Things is further provided. Fig. 3 is a flowchart of an information processing method based on Internet of Things according to an embodiment of the present disclosure. As shown in Fig. 3, the process includes the following steps:
At step S302: an access network is connected to through an interface between a core network and the access network.

At step S304: at least one of the following information of an Internet of Things terminal reported by the access network is received: reachability management information, an authentication result, and an identification result.

Through steps S302 to S304, the problem that a 5G radio access network architecture is unable to adapt to Internet of Things terminals in the related art can be solved. By modifying functions performed by the core network and the access network, a modified radio access network can be applicable to access and management of the Internet of Things terminals.

In this embodiment, step S302 specifically may include: the interface is provided for the access network through a control plane entity of the core network.

In an embodiment, the method further includes: through the control plane entity of the core network, a request message sent by a control plane entity of the access network to request the establishment of a connection is received, where the request message carries at least one of the following: an identifier of the connection, a target DN identifier, a target slice identifier, an identifier of a session management function, a connection type, resources on an access network side, and QoS requirements for services; after allocating resources for the connection through the control plane entity of the core network, a notification message is sent to a user plane entity of the core network to establish the connection through the user plane entity of the core network; and an establishment confirmation message is returned to the control plane entity of the access network through the control plane entity of the core network, where the establishment confirmation message carries at least one of the following: the identifier of the connection, an identifier indicating success or failure, and resources on a core network side.

In an embodiment, the method further includes: in the case that the reachability management information is location change information, location change information sent by the access network, indicating a change in the access network of the Internet of Things terminal is received, and specifically, the location change information sent by the access network is received through a first message; through a second message, an execution result is returned to the access network, where the execution result carries a reception result indicating whether the location change information is successfully received; and based on the location change information, a target access network that maintain the Internet of Things terminal is notified.

In an embodiment, the method further includes: in the case that the reachability management information is increased or decreased tag information, or tag information of a reachable terminal, through a third message, the increased or decreased tag information is sent to the access network, and through a fourth message, a reception result fed back by the access network about whether the increased or decreased tag information is successfully received is received; or a fifth message requesting for reporting the increased or decreased tag information, or the tag information of the reachable terminal is sent to the access network, and through a sixth message, the increased or decreased tag information, or the tag information of the reachable terminal fed back by the core network is received.

This embodiment is described in detail with the example of the control plane entity being the SMF and the access network being the base station.

### Supper RAN Architecture 1

A future network will serve multiple types of services, including some function-simplified Internet of Things terminals, such as radio frequency identification (RFID).

For an IoT terminal, due to its simple functions, there is no need to support a control process between the terminal and the core network. Moreover, the Internet of Things (IoT) terminal transmits relatively a small amount of data, has a short time to maintain a connection with the network, and is required to be in a charged state in most of time, and therefore the network does not need to maintain the state of the terminal. Therefore, network functions can be significantly simplified.

If the loT terminal does not need to support a process between the terminal and the core network, such as a non-access stratum (NAS) process, AMF functions can be simplified. The AMF does not need to maintain the connection between the terminal and the AMF, such as the N1 connection. The AMF does not need to maintain the state of the terminal; and due to the short working time of the terminal, the AMF does not need to maintain the reachability of the terminal. Due to short communication time of the terminal, there is no need to consider the continuity of communication in a movement process, and the AMF does not need to maintain the mobility, etc. of the terminal.

In summary, the AMF functions are simplified. Meanwhile, considering the flexibility of base station operations, some of the AMF functions are delegated to the base station, while only some functions are retained in the core network. As shown in Fig. 4 and Fig. 5, a CP refers to a control plane of a base station/DU, and includes functions of an AMF2, and a UP refers to a user plane of the base station/DU.

Functions that need to be retained in an AMF1 on the core network side include, for example, one of the following: an interface with the base station, a slicing function, charging, and SMF selection.

The AMF2 located on the base station has, for example, one of the following functions: reachability management, authentication, identification, and resource allocation such as an IP address.

Fig. 4 is an architecture diagram of a network system with a user plane connection according to an embodiment. As shown in Fig. 4, in a scenario with the user plane connection, the base station submits data to the core network through the user plane connection, or the core network submits the data to the base station through the user plane connection.

Fig. 5 is an architecture diagram of a network system without a user plane connection according to an embodiment. As shown in Fig. 5, in a scenario without the user plane connection, the base station sends data carried in a message to the core network through a control plane connection, or the core network sends the data carried in the message to the base station through the control plane connection.

The base station needs to interact with the core network regarding the following information:
the base station reporting resources on a local side to the core network, such as resources on a base station side for a connection between the base station and the core network (including the control plane connection and the user plane connection);
the base station reporting results of completed authentication and identification to the core network;
connections that the base station wants to establish, release, or modify, as well as connections that have been successfully or failure established, released, or modified;
the base station reporting reachable terminal information to the core network; and
the core network informing the base station of resources on a local side, such as resources on the core network for the connection between the base station and the core network (including the control plane connection and the user plane connection).

### Supper RAN Architecture 2

Based on the Architecture 1, continuing to consider simplification, the base station may be directly connected with a DN, thereby omitting forwarding through the core network; the data network (DN) is deployed locally or deployed at the local area network; terminals that support specific functions or are for a private network are fixedly connected to one DN or S-NSSAI. Therefore, the UPF may establish a connection with the fixed DN. These terminals may share a link, and data from the plurality of terminals may be sent to the DN through the link. As a result, the functions of the UPF connection can be greatly simplified. Due to the simplicity of IoT services and insensitivity to delay, QoS management is simple.

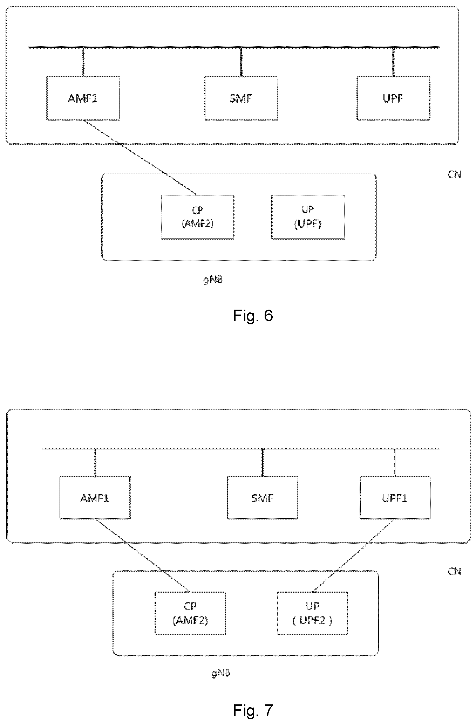

In summary, the AMF functions are simplified by delegating some of the AMF functions to the base station, while retaining only some functions in the core network. The UPF functions are simplified by delegating some of the UPF functions to the base station. Fig. 6 is a first architecture diagram of a network system based on an Internet of Things terminal according to an embodiment. As shown in Fig. 6, a CP refers to a control plane of a base station/DU, and includes functions of an AMF2, and a UP refers to a user plane of the base station/DU, and includes functions of a UPF.

Functions that need to be retained in an AMF1 on the core network side include, for example, one of the following: an interface with the base station and charging.

The AMF2 located on the base station side has, for example, one of the following functions:
a function of managing a connection between the base station and the DN, such as functions of connection establishment and release;
determining terminals associated with the connection, namely terminals with data transmitted over a certain link;
allocating or releasing resources associated with the connection on the base station side;
selecting and controlling a UPF;
configuring the UPF to route data to a correct DN;
a dynamic host configuration protocol version 4 (DHCPv4) and DHCPv6;
calculating or reporting a data volume;
reachability management;
authentication; and
identification.

The UPF located at the base station has one of the following functions: caching downlink data packets and confirming data packets, data routing and submission, data volume reporting, connecting with the DN, and data packet monitoring.

The base station needs to interact with the core network regarding the following information:
the base station reporting resources on a local side to the core network, such as resources on a base station side for a connection between the base station and the core network (including a control plane connection);
the base station reporting a data volume to the core network;
the base station reporting information about establishing or releasing a connection with the DN to the core network, such as a DN identifier, a connection identifier, and a terminal identifier;
the base station reporting reachable terminal information to the core network; and
the core network informing the base station of resources on a local side, such as resources on the core network for the connection between the base station and the core network (including the control plane connection).

### Supper RAN Architecture 3

The network needs to ensure the continuity of services and sessions. Considering the mobility of UE between different base stations/DUs, when the UE moves from one base station/DU1 to another base station/DU2, in order to ensure the continuity of a service link, the UPF in the core network disconnects from the base station/DU1 and establishes a connection with the base station/DU2. However, the method of disconnecting before connecting causes a short interruption in data transmission, affecting data continuity. Therefore, there is a need to consider that the UPF of the core network is simultaneously connected with a plurality of base stations/DUs. In addition, if joint transmission from different base stations/DUs is supported to enhance data reliability, there is also a need to consider that the UPF of the core network is simultaneously connected with the plurality of base stations/DUs.

Based on the above considerations, a central UPF is established in the core network, and a branch UPF is established in each DU. Fig. 7 is a second architecture diagram of a network system based on an Internet of Things terminal according to an embodiment. As shown in Fig. 7, a CP refers to a control plane of a base station/DU, and includes functions of an AMF2, and a UP refers to a user plane of the base station/DU, and includes functions of a UPF2.

Functions that need to be retained in an AMF1 on the core network side include, for example, one of the following:
an interface with the base station;
charging;
a function of managing a connection between the core network and the DN, such as functions of connection establishment and release;
a function of managing a connection between the core network and base stations/DUs, such as establishing a connection with specific base stations/DUs;
mapping the connection between the core network and the DN and the connection between the core network and the base station/DU;
determining duplication or distribution of data packet transmission;
allocating or releasing resources associated with the connection on the core network side;
selecting and controlling a UPF;
configuring the UPF to route data to a correct DN;
DHCPv4 and DHCPv6; and
reporting a data volume.

The AMF2 located on the base station side has, for example, one of the following functions:
a function of managing a connection between the base station and the core network, such as functions of connection establishment and release;
determining terminals associated with the connection, namely terminals with data transmitted over a certain link;
allocating or releasing resources associated with the connection on the base station side;
selecting and controlling the UPF;
reachability management;
authentication; and
identification.

Functions that need to be retained in a UPF1 on the core network side include, for example, one of the following: caching downlink data packets and confirming data packets, data routing and submission, data volume report generation, connecting with the DN, data packet monitoring, data packet duplication, and data packet distribution.

The UPF2 located on the base station has, for example, one of the following functions: data routing and submission.

The base station needs to interact with the core network regarding the following information:
the base station reporting resources on a local side to the core network, such as resources on the base station side for the connection between the base station and the core network (including a control plane connection and a user plane connection);
the base station reporting reachable terminal information to the core network; and
the core network informing the base station of resources on a local side, such as resources on the core network for the connection between the base station and the core network (including the control plane connection and the user plane connection).

The RAN is simplified based on the above architecture. Considering that functions supported by the terminal are simple and only one data packet needs to be transmitted between the terminal and the base station during communication each time, there is no need to establish a radio bearer.

The data received by the base station may be directly submitted to the DN.

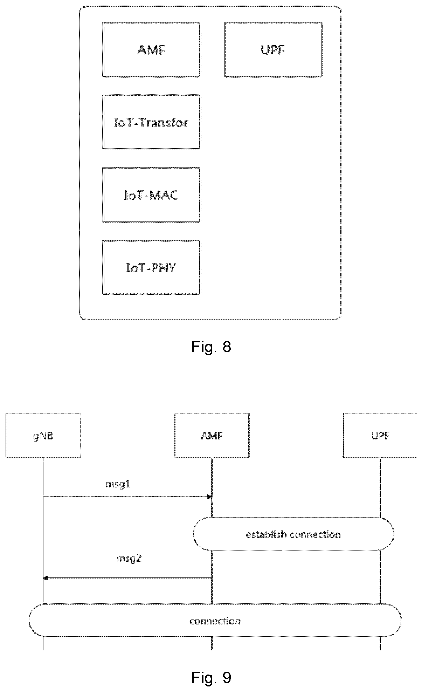

Fig. 8 is a block diagram of a protocol stack according to an embodiment. As shown in Fig. 8, the base station receives information from a terminal through an loT MAC and an loT PHY, recognition is performed at loT transform, and data sent to the DN is generated. A target DN is selected at the AMF, and a connection is established. After the UPF and the DN establish the connection, the UPF sends the data to the DN. The UPF of the base station receives the data through the connection established by the UPF and the DN, recognition is performed at the loT transform, and data sent to the UE is generated. The data is sent to the terminal through the loT MAC and the loT PHY

For the Architecture 1, Fig. 9 is a flowchart of establishing a connection between a base station and a core network according to an embodiment. As shown in Fig. 9, the process of establishing the connection is as follows:
if receiving information fed back from the terminal, the base station may determine the establishment of a connection between the terminal and the DN based on these information, and send an establishment request message to the AMF. The message carries at least one of the following: a connection identifier; a target DN identifier; target S-NSSAI; an SMF identifier; a connection type, such as the connection being an IoT connection, which carries data of a plurality of terminals; resources of base station side, such as an IP address related to the connection, and a general packet radio service tunneling protocol for user plane (GTPU) identifier; and service QoS requirements, such as a rate that the service needs to meet.

If receiving the request from the base station, the AMF may select the UPF based on the received information, and allocate resources related to the connection, such as the IP address. Then, the AMF informs the UPF of the establishment of the connection.

After the connection is successfully established, the AMF feeds back a result to the base station and an establishment confirmation message. The message carries at least one of the following: a connection identifier; an identifier indicating success or failure; core network-side resources, such as the IP address related to the connection and the GTPU identifier.

In this embodiment, the reachability management function is descended to the RAN, such that the base station has the reachability function. The base station needs to know a location range of the terminal, such as a cell or base station where the terminal is located, thereby establishing a connection with the base station, and the terminal may receive a signal.

The base station needs to know the location range of the terminal and maintain information about the terminal. The base station records and stores the information about the terminal within its coverage, such as a terminal identifier, S-NSSAI, a public land mobile network (PLMN), and an application framework (dot net nuck, abbreviated as DN). If the number of terminals increases or decreases, the base station needs to inform the core network or a server.

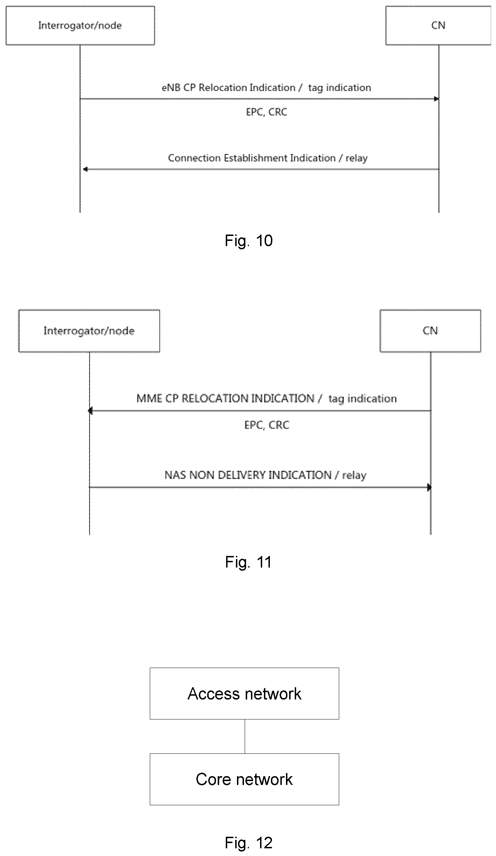

Considering that the terminal may be mobile, the base station needs to continuously grasp changes of the terminal within its coverage. The base station needs to know the location range of the terminal, specifically including:
Method 1: The base station actively obtains information of the terminal. The base station may require the terminal to report its information at regular intervals or based on a certain event. The base station may initiate an inventory process for all or some terminals. All or some terminals may be selected based on a command sent by the base station. The selected terminal feeds back its information to the base station, including a terminal identifier, S-NSSAI, a PLMN, a DN, etc. After obtaining the information, the base station compares the information with stored terminal information to obtain the status of the terminal, such as increase or decrease of terminals, and terminals that can establish a connection.
Method 2: The base station actively obtains information about a terminal that undergoes changes. When the terminal finds changes in its location range or changes in single network slice selection assistance information (S-NSSAI), a PLMN, or a DN associated with a terminal connection, the terminal reports its information. The base station may initiate an inventory process for the terminal that undergoes changes. The terminal that undergoes changes may be selected based on a command sent by the base station, such as whether a selected cell, a location range, S-NSSAI, a PLMN, and a DN changes. The selected terminal feeds back its information to the base station, and reports information about changes to the base station, including a terminal identifier, S-NSSAI, a PLMN, a DN, etc. After obtaining the information, the base station may obtain the status of the terminal, such as increase or decrease of terminals, and terminals that can establish a connection.
   1. The base station reports the terminal information to the core network. Specifically, a first message may be used for reporting, such as the SMF. Fig. 10 is a first flowchart of information interaction between a base station and a core network according to an embodiment. As shown in Fig. 10, the base station reports location change information through msg1 (corresponding to the above first message), such as eNB CP relocation indication/tag indication, which is information about tags to be newly increased or decreased, including electronic product code (EPC) and cyclic redundancy check (CRC) to the core network (CN).
   2. After receiving the information, the CN feeds back msg2 (corresponding to the above second message) to the base station, such as connection establishment indication/relay, informing an execution result about success or failure.

   1. If obtaining the location change of the terminal, the core network may notify the base station that previously maintains the information. Fig. 11 is a second flowchart of information interaction between a base station and a core network according to an embodiment. As shown in Fig. 11, the CN indicates to the base station the information about tags to be newly increased or decreased, including EPC and CRC, through msg1 (corresponding to the above third message), such as MME CP relocation indication/tag indication.
   2. After receiving the information, the base station sends feedback to the CN through msg2 (corresponding to the above fourth message), such as NAS NON DELIVERY INDICATION/relay, to inform an execution result about success or failure. Alternatively,

   1. The CN requests the base station to report tag information through msg1 (corresponding to the above fifth message), such as information about reachability tags stored by the base station, or information about newly increased or decreased tags.
   2. After receiving the information, the base station feeds back the tag information to the CN through msg2 (corresponding to the above sixth message), such as the reachability tags stored by the base station, or EPC, CRC, etc. of the newly increased or decreased tags, and indicates the information to the CN.

According to another embodiment of the present disclosure, a network system based on Internet of Things is further provided. Fig. 12 is a block diagram of a network system based on Internet of Things according to an embodiment. An access network and a core network are included, where

The core network is configured to perform charging management on an Internet of Things terminal; and the access network is configured to access the core network through an interface between the core network and the access network so as to report at least one of the following information of the Internet of Things terminal to the core network: reachability management information, an authentication result, and an identification result.

In an embodiment, the core network includes: a control plane entity, and a control plane (CP) of the access network includes an access and mobility management function, where
the control plane entity of the core network is configured to provide an interface for the access network and perform charging management on the Internet of Things terminal; and
a control plane entity of the access network is configured to access the core network through the interface and report at least one of the following information of the Internet of Things terminal to the core network: reachability management information, an authentication result, and an identification result.

In an embodiment, the control plane entity of the core network is further configured to perform one of the following: a slicing function and selection of a session management function; and
the access network is also configured to report resources on the base station side to the core network, and report information about a connection that is established, released, or modified between the terminal-based core network and the access network, as well as information about the connection that has been successfully or failure established, released, or modified, to the core network; and
the core network is configured to inform the access network of resources on the core network side.

In an embodiment, when the access network and the data network (DN) are connected, the user plane of the access network includes a user plane management function;
the access and mobility management function of the access network is further configured to perform at least one of the following: managing a connection between the access network and the DN, determining an Internet of Things terminal associated with the connection, allocating or releasing resources on the access network side associated with the connection, selecting, controlling, and configuring the user plane management function and routing data to the corresponding DN, communicating with the core network based on DHCPv4 or DHCPv6, and reporting a data volume; and
the user plane management function of the access network is configured to perform at least one of the following: caching downlink data packets and confirming data packets, data routing and submission, data volume reporting, connecting with the DN, and data packet monitoring.

In an embodiment, when there are a plurality of access networks, the core network is respectively connected with the plurality of access networks, and a user plane (UP) of each access network includes a user plane management function, where
the control plane entity of the core network is further configured to perform at least one of the following: managing a first connection between the core network and the data network (DN), managing a second connection between the core network and the access network, mapping the first connection and the second connection, determining duplication or distribution of data packet transmission, allocating or releasing resources on the core network side associated with the connection, selecting and controlling the user plane management function, configuring the user plane management function, routing data to the corresponding DN, communicating with the access network based on DHCPv4 or DHCPv6, and reporting a data volume;
the control plane entity of the access network is further configured to perform at least one of the following: managing a connection between the access network and the core network, determining an Internet of Things terminal associated with the connection, releasing resources on the access network side associated with the connection, and selecting and controlling the user plane management function;
the user plane management function of the core network is configured to perform at least one of the following: caching downlink data packets, data routing and submission, data volume report generation, connecting with the DN, data packet monitoring, data packet duplication, and data packet distribution; and
the user plane management function of the access network is configured to perform data routing and submission.

According to another embodiment of the present disclosure, a radio access network system based on Internet of Things is further provided, and includes an access network and a core network, where
the core network is configured to perform some functions of a control plane (CP) or a user plane (UP) of the access network.

In an embodiment, the core network at least includes: an access and mobility management function (AMF1), a session management function (SMF), and a user plane management function (UPF), where the control plane (CP) of the access network includes an AMF2,
the AMF1 of the core network is configured to perform at least one of the following functions of the user plane (UP) of the access network: submitting channel quality and load information of the access network to the SMF of the core network;
the SMF of the core network is configured to perform at least one of the following: establishing, modifying, or releasing a bearer, determining whether data of a QOS flow is duplicated or distributed, determining mapping from the QOS flow to the bearer, configuring an encryption algorithm and a decryption algorithm, and configuring an integrity algorithm;
the UPF of the core network is configured to perform at least one of the following: mapping from the QOS flow to a data radio bearer (DRB), replicating and distributing data packets, encrypting the data packets based on the encryption algorithm or decrypting the data packets based on the decryption algorithm, and determining the integrity of the data packets based on the integrity algorithm; and
the AMF2 of the access network is further configured to perform at least one of the following: reporting channel quality and load information.

The future network will serve one terminal through a plurality of nodes (e.g., a base station and a DU). Coordination among the plurality of nodes is necessary. Therefore, the core network may add some functions to coordinate the nodes. Different base stations/DUs may serve different services. For example, based on the channel quality or load of the base stations/DUs, some base stations/DUs with lighter loads and better channel quality may be selected to provide services with high delay sensitivity and reliability for the terminal. The different base stations/DUs may serve the same service, such as supporting joint transmission from the different base stations/DUs to improve data reliability. The different base stations/DUs may adopt the same encryption and decryption algorithms and the same integrity protection algorithm. In summary, some functions of the user plane of the base station are elevated to the core network.

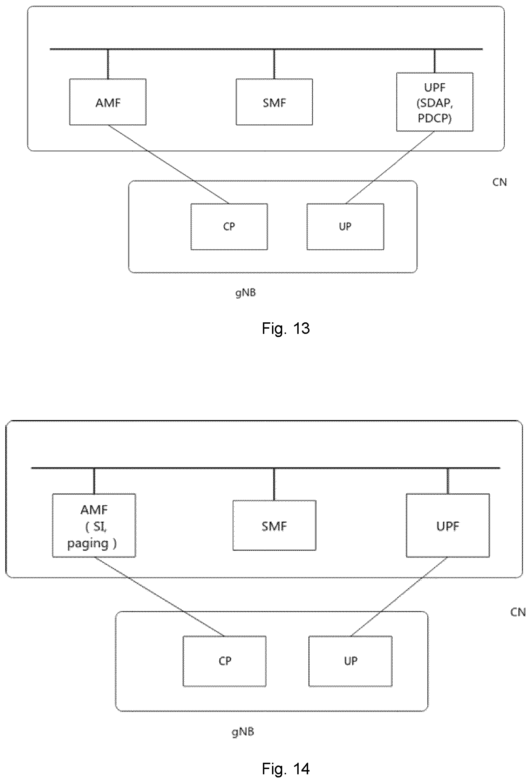

Fig. 13 is a first minimal architecture diagram of a network system based on an Internet of Things terminal according to an embodiment. As shown in Fig. 13, a CP refers to a control plane of a base station/DU, a UP refers to a user plane of the base station/DU, a UPF is included in the user plane of the core network, and includes functions of a service data adaptation protocol (SDAP) and a packet data convergence protocol (PDCP).

Additional functions for an AMF include: submitting information such as channel quality and load of the base station/DU to the SMF.

Additional functions for an SMF include:
establishing, modifying, or releasing a bearer;
determining whether data of a QOS flow is duplicated or distributed;
determining a function of mapping from the QOS flow to the bearer;
configuring an encryption algorithm and a decryption algorithm; and
configuring an integrity algorithm.

Additional functions for the UPF include: a function of mapping from the QOS flow to the DRB, a function of data packet duplication and distribution, encryption or decryption, and integrity protection.

Additional functions for the CP of the base station/DU include: reporting information such as channel quality and load.

The base station needs to interact with the core network regarding the following information:
the base station reporting resources on a local side to the core network, such as resources on the base station side for a connection between the base station and the core network (including a control plane connection and a user plane connection);
the base station submitting information such as the channel quality and the load of the base station/DU to the core network; and
the core network informing the base station of resources on a local side, such as resources on the core network for the connection between the base station and the core network (including the control plane connection and the user plane connection).

In another embodiment, the core network at least includes: an access and mobility management function (AMF1), and the control plane (CP) of the access network includes an AMF2, where

The AMF1 of the core network is configured to perform at least one of the following functions of the control plane (CP) of the access network: configuration of wireless resources, generation of system information messages, allocation of resources for sending system information, generation of paging messages, and configuration of resources for sending paging messages; and
the AMF2 of the access network is configured to perform at least one of the following: receiving and configuring system information, and receiving and configuring paging messages.

The future network will form a cell free service through combined nodes (e.g., a base station and a DU). For example, terminals move under these nodes without perceiving changes of a cell or even triggering cell handovers. Coordination among the plurality of nodes is necessary. Therefore, the core network may add some functions to coordinate the nodes.

Different base stations/DUs may have the same configuration and broadcast the same system information. For example, if a terminal is not required to perceive changes in the base station/DU, the terminal does not need to perceive changes in resource allocation neither. The different base stations/DUs may send the same paging message. For example, if the terminal is not required to perceive changes in the base station/DU, the terminal does not need to perceive changes in received paging neither. In summary, some functions of the control plane of the base station are elevated to the core network.

Fig. 14 is a second minimal architecture diagram of a network system based on an Internet of Things terminal according to an embodiment. As shown in Fig. 14, a CP refers to a control plane of a base station/DU, a UP refers to a user plane of the base station/DU, and an AMF is included in a control plane of a core network, and includes information and paging functions of the system.

Additional functions for an AMF include: configuration of wireless resources (e.g., an air interface), generation of system information messages, configuration of resources (a frequency domain and a time domain) for sending system information, generation of paging messages, and configuration of resources (the frequency domain and the time domain) for sending the paging messages.

Additional functions for the CP of the base station/DU include: receiving the system information and configuration thereof, and receiving the paging messages and configuration thereof.

The base station needs to interact with the core network regarding the following information:
the base station reporting resources on a local side to the core network, such as resources on the base station side for a connection between the base station and the core network (including a control plane connection and a user plane connection);
the core network informing the base station of resources on a local side, such as resources on the core network for the connection between the base station and the core network (including the control plane connection and the user plane connection);
the core network sending the system information messages and resource configurations to the base station; and
the core network sending the paging messages and resource configurations to the base station.

An embodiment of the present disclosure further provides a computer-readable storage medium, and the computer-readable storage medium stores a computer program. The computer program is configured to cause, when executed by a processor, the processor to perform the steps in any one of the above method embodiments during operation.

In an exemplary embodiment, the above computer-readable storage medium may include, but is not limited to: a U disk, a read-only memory (ROM for short), a random access memory (RAM for short), a mobile hard disk, a magnetic disk, a compact disc, or other media capable of storing computer programs.

An embodiment of the present disclosure further provides an electronic apparatus including a memory and a processor. The memory stores a computer program, and the processor is configured to execute the computer program so as to perform the steps in any one of the above method embodiments.

In an exemplary embodiment, the above electronic apparatus may further include a transmission device and an input and output device. The transmission device is connected with the above processor, and the input and output device is connected with the above processor.

For specific examples in this embodiment, reference may be made to the examples described in the above embodiments and exemplary implementations, which will not be described in detail in this embodiment.

Apparently, those skilled in the art should understand that the modules or steps in the present disclosure may be implemented through a general-purpose computing device, which may be centralized in a single computing device or distributed over a network formed by a plurality of computing devices, and may be implemented by executable program code of the computing device, such that the modules or steps may be stored in a storage apparatus to be executed by the computing device; and in some cases, the shown or described steps may be executed in a different order than presented here, or the modules or steps may be made into various integrated circuit modules, or more of the modules or steps may be made into a single integrated circuit module to be implemented. Therefore, the present disclosure is not limited to any specific hardware and software combination.

The above contents are merely preferred embodiments of the present disclosure, and are not intended to limit the present disclosure, and for those skilled in the art, the present disclosure may have various modifications and changes. Any modification, equivalent replacement, improvement, etc. made within the principle of the present disclosure shall fall within the scope of protection of the present disclosure.

## Claims

1. A radio access method based on Internet of Things, comprising:
connecting to a core network through an interface between the core network and an access network; and
reporting at least one of the following information of an Internet of Things terminal to the core network: reachability management information, an authentication result, and an identification result.

2. The method according to claim 1, wherein the connecting to a core network through an interface between the core network and an access network comprises:
accessing, based on a control plane entity, the core network through the interface provided by the control plane entity of the core network, and reporting at least one of the following information to the core network: the reachability management information, the authentication result, and the identification result.

3. The method according to claim 2, further comprising:
sending a request message requesting for establishing a connection to the control plane entity of the core network through a control plane entity of the access network, wherein the request message carries at least one of the following: an identifier of the connection, a target DN identifier, a target slice identifier, an identifier of a session management function, a connection type, resources on an access network side, and quality of service ,QoS, requirements for services; and
receiving, based on the control plane entity of the access network, an establishment confirmation message returned by the core network, wherein the establishment confirmation message carries at least one of the following: the identifier of the connection, an identifier indicating success or failure, and resources on a core network side.

4. The method according to claim 1, further comprising:
in the case that the reachability management information is location change information, obtaining location change information indicating a change in the access network of the Internet of Things terminal; and
reporting the location change information to the core network.

5. The method according to claim 4, wherein the reporting the location change information to the core network comprises:
sending the location change information to the core network through a first message; and
receiving an execution result returned by the core network through a second message, wherein the execution result carries a reception result indicating whether the location change information is successfully received.

6. The method according to claim 1, further comprising:
in the case that the reachability management information is increased or decreased tag information, or tag information of a reachable terminal, receiving, through a third message, the increased or decreased tag information sent by the core network, and feeding back, through a fourth message, a reception result indicating whether the third message is successfully received to the core network; or,
receiving a fifth message from the core network requesting for reporting the increased or decreased tag information, or the tag information of the reachable terminal, and feeding back, through a sixth message, the increased or decreased tag information, or the tag information of the reachable terminal to the core network.

7. The method according to claim 1, further comprising:
obtaining the reachability management information of the Internet of Things terminal; and/or,
performing authentication on the Internet of Things terminal to obtain the authentication result; and/or,
performing identification on the Internet of Things terminal to obtain the identification result.

8. An information processing method based on Internet of Things, comprising:
connecting to an access network through an interface between a core network and the access network; and
receiving at least one of the following information of an Internet of Things terminal reported by the access network: reachability management information, an authentication result, and an identification result.

9. The method according to claim 8, wherein providing an interface for an access network comprises:
providing the interface for the access network through a control plane entity of the core network.

10. The method according to claim 9, further comprising:
receiving, through the control plane entity of the core network, a request message sent by a control plane entity of the access network to request the establishment of a connection, wherein the request message carries at least one of the following: an identifier of the connection, a target data network ,DN, identifier, a target slice identifier, an identifier of a session management function, a connection type, resources on an access network side, and quality of service ,QoS, requirements for services;
after allocating resources for the connection through the control plane entity of the core network, sending a notification message to a user plane entity of the core network to establish the connection through the user plane entity of the core network; and
returning an establishment confirmation message to the control plane entity of the access network through the control plane entity of the core network, wherein the establishment confirmation message carries at least one of the following: the identifier of the connection, an identifier indicating success or failure, and resources on a core network side.

11. The method according to claim 8, further comprising:
in the case that the reachability management information is location change information, receiving location change information sent by the access network, indicating a change in the access network of the Internet of Things terminal; and
notifying, based on the location change information, a target access network that maintain the Internet of Things terminal.

12. The method according to claim 11, wherein the receiving location change information sent by the access network, indicating a change in the access network of the Internet of Things terminal comprises:
receiving, through a first message, the location change information sent by the access network; and
returning, through a second message, an execution result to the access network, wherein the execution result carries a reception result indicating whether the location change information is successfully received.

13. The method according to claim 8, further comprising:
in the case that the reachability management information is increased or decreased tag information, or tag information of a reachable terminal, sending, through a third message, the increased or decreased tag information to the access network, and receiving, through a fourth message, a reception result fed back by the access network about whether the increased or decreased tag information is successfully received; or,
sending a fifth message requesting for reporting the increased or decreased tag information, or the tag information of the reachable terminal to the access network, and receiving, through a sixth message, the increased or decreased tag information, or the tag information of the reachable terminal fed back by the core network.

14. A network system based on Internet of Things, comprising: an access network and a core network, wherein
the core network is configured to perform charging management on an Internet of Things terminal; and
the access network is configured to access the core network through an interface between the core network and the access network so as to report at least one of the following information of the Internet of Things terminal to the core network: reachability management information, an authentication result, and an identification result.

15. The system according to claim 14, wherein
the core network comprises: a control plane entity, and a control plane ,CP, of the access network comprises an access and mobility management function, wherein
the control plane entity of the core network is configured to provide an interface for the access network and perform charging management on the Internet of Things terminal; and
a control plane entity of the access network is configured to access the core network through the interface and report at least one of the following information of the Internet of Things terminal to the core network: the reachability management information, the authentication result, and the identification result.

16. The system according to claim 15, wherein
the control plane entity of the core network is further configured to perform one of the following: a slicing function and selection of a session management function; and
the access network is also configured to report resources on a base station side to the core network, and report information about a connection that is established, released, or modified between the terminal-based core network and the access network, as well as information about the connection that has been successfully or failure established, released, or modified, to the core network; and
the core network is configured to inform the access network of resources to the core network side.

17. The system according to claim 14, wherein
when the access network and a data network ,DN, are connected, a user plane of the access network comprises a user plane management function;
an access and mobility management function of the access network is further configured to perform at least one of the following: managing a connection between the access network and the data network ,DN, determining an Internet of Things terminal associated with the connection, allocating or releasing resources on the access network side associated with the connection, selecting, controlling, and configuring a user plane management function and routing data to a corresponding DN, communicating with the core network based on a dynamic host configuration protocol DHCPv4 or DHCPv6, and reporting a data volume; and
the user plane management function of the access network is configured to perform at least one of the following: caching downlink data packets and confirming data packets, data routing and submission, data volume reporting, connecting with the DN, and data packet monitoring.

18. The system according to claim 14, wherein
when there are a plurality of access networks, the core network is respectively connected with the plurality of access networks, and a user plane ,UP, of the access network comprises a user plane management function, wherein
a control plane entity of the core network is further configured to perform at least one of the following: managing a first connection between the core network and the data network ,DN, managing a second connection between the core network and the access network, mapping the first connection and the second connection, determining duplication or distribution of data packet transmission, allocating or releasing resources on a core network side associated with the connection, selecting and controlling the user plane management function, configuring the user plane management function, routing data to a corresponding DN, communicating with the access network based on DHCPv4 or DHCPv6, and reporting a data volume;
a control plane entity of the access network is further configured to perform at least one of the following: managing a connection between the access network and the core network, determining an Internet of Things terminal associated with the connection, releasing resources on an access network side associated with the connection, and selecting and controlling the user plane management function;
the user plane management function of the core network is configured to perform at least one of the following: caching downlink data packets, data routing and submission, data volume report generation, connecting with the DN, data packet monitoring, data packet duplication, and data packet distribution; and
the user plane management function of the access network is configured to perform data routing and submission.

19. A computer-readable storage medium, wherein the storage medium stores a computer program, and the computer program is configured to cause, when executed by a processor, the processor to perform the method as claimed in any one of claims 1 to 7 and 8 to 13.

20. An electronic apparatus, comprising a memory and a processor, wherein the memory stores a computer program, and the processor is configured to execute the computer program to perform the method as claimed in any one of claims 1 to 7 and 8 to 13.
